# EUROPEAN PATENT APPLICATION

(11) **EP 0 884 083 A1**
(43) Date of publication of application: **16.12.1998**
(21) Application number: 96941170.1
(22) Date of filing: 05.12.1996
(51) Int. Cl.: B01D 45/10

(54) **SYSTEM FOR COLLECTING AND RECOVERING PAINT MIST, AND METHOD THEREFOR**

(30) Priority: 06.12.1995 JP 317880/95
(71) Applicant: KANSAI PAINT CO., LIMITED, Amagasaki-shi Hyogo 661 (JP)
(72) Inventor: FUJIMOTO, Shinji, Kanagawa 254 (JP); KIKUTA, Makoto, Totsuka-ku Yokohama-shi Kanagawa 244 (JP)
(74) Representative: Weisert, Annekäte, Dipl.-Ing. Dr.-Ing.
(86) International application number: JP9603555
(87) International publication number: WO9720614

(57) **Abstract**

Paint mists not attaching to an object to be painted are efficiently collected and efficiently recovered under a state in which the paint mists can be recycled as paint. The following are included: a capturing section having a route for changing channels, blast means for flowing paint mists through the route together with air, a recovery tank storing a recovery solution, and support means for supporting each portion of the capturing section so that the portion can be moved to an immersing position to be immersed in the recovery solution stored in the recovery tank and a taking-out position coming out of the recovery tank.

## Description

### Technical Field

The present invention relates to a paint mist collecting and recovering system and its method.

### Background Art

A method of collecting particles by changing air channels by an obstacle, thereby separating the particles from the flow of air by the inertial force, and bringing them into contact with the surface of the obstacle and thereafter, forcibly scratching off the particles (official gazette of Japanese Patent Laid-Open No. 151330/1977 and a method of recovering particles after collecting the particles and thereafter diluting them with water or the like (official gazette of Japanese Patent Laid-Open No. 5338/1976) have been proposed so far as methods for collecting and recovering paint mists and atomised particles not attaching to an object to be painted.

However, these methods have a problem that it is indispensable to clean or renew parts in order to maintain the performance of a system and thus, these operations burden operators because collected paint mists are scratched off or washed with water and therefore, attached paint cannot be completely removed or residual paint is dried, fixed, and accumulated.

It is an object of the present invention to provide a paint mist collecting and recovering system capable of efficiently collecting and recovering paint mists as recyclable paint and keeping the collecting and recovering efficiency.

### Disclosure of the Invention

To achieve the above object, the present invention provides a paint mist collecting and recovering system comprising:
a capturing section having a route for changing channels;
blast means for flowing paint mists together with air through the route;
a recovery tank storing a recovery solution; and
support means for supporting each portion of the capturing section so that the portion can be moved to an immersing position to be immersed in the recovery solution in the recovery tank and a taking-out position coming out of the recovery tank.

According to a paint mist collecting and recovering system of the present invention, particles separated from the flow or air by the inertial force due to change of routes are collected because the particles contact the surface of a capturing section. The collected paint mists are collected and recovered without drying or accumulating because the surface of the capturing section is kept wet and thus, the performance of the paint mists is maintained. Moreover, because paint mists collected and recovered by the present method can be changed to a state almost close to paint, it is possible to recycle them as paint by slightly adjusting them.

Moreover, to achieve the above object, the present invention provides a paint mist collecting and recovering method comprising the steps of:
forming a capturing section having a first portion and a second portion respectively having a route for changing channels;
wetting the surface of the first portion by a recovery solution by immersing the first portion in the recovery solution stored in a recovery tank and thereafter, taking the first portion out of the recovery tank;
immersing the second portion in the recovery solution stored in the recovery tank;
flowing paint mists through the route of the first portion together with air to make the paint mists attach to the surface of the first portion wet by the recovery solution;
taking the second portion out of the recovery tank; and
thereafter immersing the first portion to which the paint mists are attached in the recovery solution stored in the recovery tank and moving the paint mists attached to the surface of the first portion to the recovery solution stored in the recovery tank.

Moreover, to achieve the above object, the present invention provides a paint mist collecting and recovering method comprising the steps of:
forming a capturing section having a route for changing channels and immersing at least a part of the capturing section in a recovery solution stored in a recovery tank and taking the capturing section out of the recovery tank to wet at least a part of the surface of the capturing section by the recovery solution;
flowing paint mists through the route together with air and attaching the paint mists to the surface of the capturing section wet by the recovery solution;
immersing the surface of the capturing section to which the paint mists are attached in the recovery solution stored in the recovery tank to move the paint mists attached to the surface of the capturing section to the recovery solution stored in the recovery tank; and
using the mists as paint by adjusting the concentration of the recovery solution to which the paint mists are moved.

### Brief Description of the Drawing

Figure 1 is a sectional view of the paint mist collecting and recovering system of a preferred embodiment of the present invention;
Figure 2 is a sectional view of a capturing section of the collecting and recovering system in Fig. 1, taken along the line A-A in Fig. 1;
Figure 3 is a sectional view of another capturing section of the collecting and recovering system in Fig. 1, taken along the line A-A in Fig. 1;
Figure 4 is a sectional view of a paint mist collecting and recovering system of another preferred embodiment of the present invention; and
Figure 5 is a sectional view of the system in Fig. 4, taken along the line B-B in Fig. 4.

### Best Modes for Carrying Out the Invention

Preferred embodiments of the present invention are described below in detail by referring to the accompanying drawings.

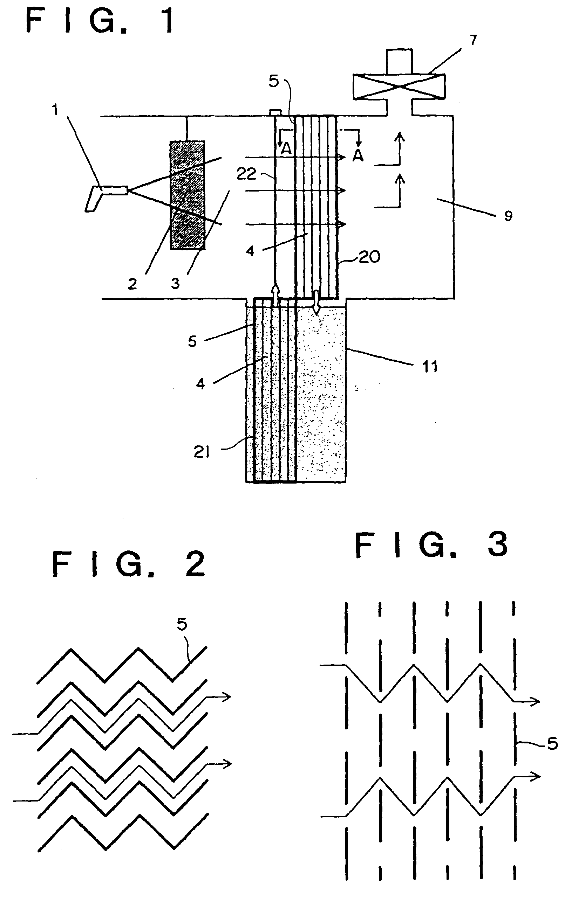

Figure 1 is an illustration of a painting booth provided with a collecting and recovering system of an preferred embodiment of the present invention.

The painting booth is provided with a painting system having a point spraying nozzle for painting an object 2 to be painted and a collecting and recovering system for collecting and recovering paint mists.

The collecting and recovering system is provided with a capturing section 4 formed with a flat member 5. The flat member 5 forms the capturing section 4 by arranging flat members adjacently to each other at a plurality of stages at predetermined intervals so as to form a route for changing channels between the members. The shape of the route of the capturing section 4 is not restricted as long as the shape changes courses of air and prevents at least particles from linearly advancing. The capturing section 4 can be formed into a shape in which a plurality of bend plates are arranged in parallel with the direction of air flow as shown in Fig. 2. Moreover, the capturing section 4 can be constituted with a plurality of flat plates respectively having a slit as shown in Fig. 3. In this case, it is preferable to prevent the slits of adjacent plates from overlapping.

According to the capturing and recovering system, paint mists 3 enters the capturing section 4 in accordance with the flow of air drawn by an exhaust fan 7. In the capturing section 4, because a channel is bent due to the arrangement of the flat member 5, the paint mists 3 are separated from the flow of air due to the inertial force and collected by contacting the surface of the flat member 5. A recover tank 11 stores a recovery solution. It is preferable that the recovery solution is a paint same as the paint sprayed from a paint spraying nozzle 1 or a solution obtained by diluting the paint. In the case of this embodiment, the capturing section 4 is provided with a first portion 20 and a second portion 21. The first portion 20 and the second portion 21 are supported by support means 22 so that they can be respectively moved to an immersing position to be immersed in the recovery solution stored in the recovery tank 11 and a taking-out position taken out of the recover tank 11. These movements can be performed by not-illustrated driving means or manually.

It is preferable to apply surface treatment to the surface of the capturing section 4 so that attached paint mists can be easily recovered in the recovery solution stored in the recovery tank 11 from the capturing section 4 immersed in the recovery solution stored in the recovery tank 11. As a surface treatment agent to be applied to the surface of the capturing section 4, silicone resin, fluorocarbon resin, or fluorine-con-tained acrylic resin can be used as long as the resin shows a lyophobic property and has a function for preventing paint mists from attaching to or accumulating on the surface of a member.

Moreover, it is possible to use a treatment agent having a lyophilic property such as water soluble nylon, water glass, or polyvinyl alcohol. When using one of these treatment agents, it is easy to keep the entire surface of a capturing section wet and an advantage of preventing paint mists from attaching to or accumulating on the surface of the capturing section can be obtained.

Paint mists attach to the surface of a wet capturing section, that is, the paint mists do not directly attach to the surface of the capturing section but they attach to a recovery solution covering the surface of it. Therefore, it is possible to make paint mists efficiently attach to an object and efficiently recover them in a recovery tank.

The collecting and recovering system operates as shown below. First, the first portion 20 and second portion 21 of the capturing section 4 are present at the taking-out position. Then, the first portion 20 is moved to the immersing position and thereafter, moved to the taking-out position to move the second portion 21 to the immersing position. In this case, the first portion 20 is wet by a recovery solution. Then, the exhaust fan 7 is operated so that air flows through the channel of the first portion 20 of the capturing section 4. Then, by painting the object 2 to be painted by using the paint spraying nozzle 1, some of sprayed paint attaches to the object 2 to be painted to cover the object 2 and other sprayed paint serves as the paint mists 3 without attaching to the object 2. The paint mists 3 flow through the bent channel of the first portion 20 of the capturing section 4 together with air. The paint mists 3 are relatively heavy and tend to linearly advance. Therefore, when the paint mists 3 advance through a bent channel, they hit the surface of the first portion 20 and are captured. In this case, because the surface of the first portion 20 is wet by the recovery solution, it efficiently captures the paint mists 3. The second portion 21 is moved from the immersing position to the taking-out position before the surface of the first portion 20 is dried and thereafter, the first portion 20 is moved from the taking-out position to a wetting position. The paint mists 3 captured to the surface of the first portion 20 moved to the wetting position are moved to the recovery solution stored in the recovery tank. By alternately repeating the above operations at the first portion 20 and the second portion 21, it is possible to maintain the collecting and recovering operations. After the recovery solution stored in the recovery tank 11 reaches a predetermined concentration, it can be recycled as paint by slightly adjusting it.

In the case of this embodiment, the capturing section 4 is constituted with the first portion 20 and the second portion 21. Moreover, it is possible to constitute the capturing section 4 with three portions or more.

In the case of this embodiment, the capturing section 4 constituted with a plurality of flat members 5 is set in two stages or more and they are alternately immersed in the recovery tank 11 every predetermined time. Therefore, the recovery efficiency is prevented from lowering due to dried surfaces of the flat members, the surface state of the capturing section is kept constant, the collecting and recovering efficiencies of the capturing section can be kept high, and continuous operation can be performed.

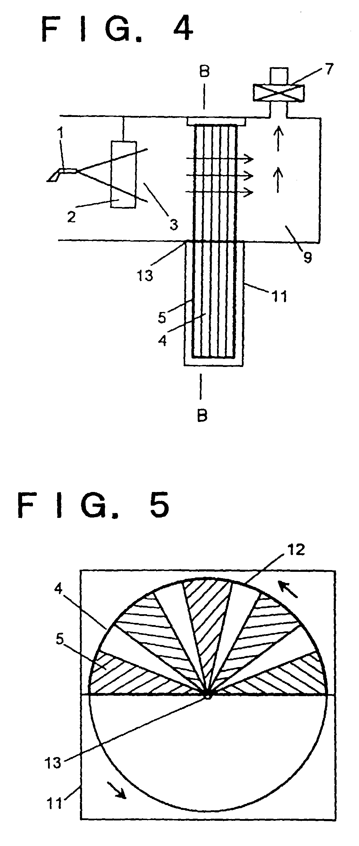

Then, the collecting and recovering system of still another preferred embodiment of the present invention is described below by referring to Figs. 3 and 4.

Figure 3 is a sectional view of the system of this embodiment. The collecting and recovering system is provided with a discoid capturing section 4 and the capturing section 4 is provided with a plurality of stages of flat members 5 radially arranged from the center of the disk. Paint mists enter a painting booth through the opening (capturing section) of the booth in accordance with the flow of the air drawn by an exhaust fan 7 and are captured.

Figure 4 shows the cross section B-B in Fig. 3. The lower half of the discoid capturing section 4 is always immersed in a recovery tank 11 and slowly rotated about a rotary shaft 13 at a predetermined speed by not-illustrated means. Therefore, the surfaces of flat members are prevented from drying and as a result, collecting and recovering efficiencies can be maintained.

It is also possible to use the structure shown in, for example, Figs. 2 and 3 as the structure of the capturing section 4. Moreover, it is possible to apply surface treatment to the flat members of the capturing section 4 as described above.

According to a pain mist collecting and recovering system of the present invention, it is possible to maintain a high recovery efficiency and a high performance because the surface of a capturing section is kept wet and thereby, even if paint mists attach to the surface of the capturing section, they do not dry or accumulate. Moreover, because recovered paint mists can be changed to a state almost close to paint, it can be recycled as paint by slightly adjusting the mists.

## Claims

1. A paint mist collecting and recovering system comprising:
a capturing section having a route for changing channels;
blast means for flowing paint mists through said route together with air;
a recovery tank storing a recovery solution; and
support means for supporting each portion of said capturing section so that the portion can be moved to an immersing position to be immersed in the recovery solution stored in said recovery tank and a taking-out position coming out of said recovery tank.

2. The recovering system according to claim 1, wherein
said capturing section has a first portion and a second portion, and
said first portion and second portion are alternately immersed in said recovery tank by said support means.

3. The recovering system according to claim 1, wherein
said capturing section comprises a discoid capturing section formed with a plurality of sectoral flat members radially arranged from the center,
a part of said discoid capturing section is present at a position always immersed in the recovery solution stored in said recovery tank, and
said support means is provided with driving means for rotating said discoid capturing section to successively moving a portion to be immersed in the recovery solution stored in said recovery tank.

4. The paint mist collecting and recovering system according to any one of claims 1 to 3, wherein said capturing section is formed with a plurality of bent flat members arranged at predetermined intervals.

5. The paint mist collecting and recovering system according to any one of claims 1 to 3, wherein
said capturing section is constituted with a plurality of flat plates having slits and the slits of adjacent flat plates are not overlapped.

6. The paint mist collecting and recovering system according to any one of claims 1 to 5, wherein said recovery solution is paint.

7. The paint collecting and recovering system according to any one of claims 1 to 5, wherein said recovery solution is a diluent.

8. A paint mist collecting and recovering method comprising the steps of:
forming a capturing section having a first portion and a second portion respectively having a route for changing channels;
making the surface of said first portion wet by a recovery solution by immersing said first portion in the recovery solution stored in a recovery tank and thereafter, taking said first portion out of said recovery tank;
immersing said second portion in the recovery solution stored in said recovery tank;
flowing paint mists through the route of said first portion to make said paint mists attach to the surface of said first portion wet by said recovery solution;
taking said second portion out of said recovery tank; and
thereafter, immersing said first portion to which said paint mists are attached in the recovery solution stored in said recovery tank and moving the paint mists attached to the surface of said first portion to the recovery solution stored in said recovery tank.

9. A paint mist collecting and recovering method comprising the steps of:
forming a capturing section having a route for changing channels;
immersing at least a part of said capturing section in a recovery solution stored in a recovery tank, taking said capturing section out of said recovery tank, and making at least a part of the surface of said capturing section wet by said recovery solution;
flowing paint mists through said route together with air to make said paint mists attach to the surface of said capturing section wet by said recovery solution;
immersing the surface of said capturing section to which said paint mists are attached in the recovery solution stored in said recovery tank to move said paint mists attached to the surface of said capturing section to the recovery solution stored in said recovery tank; and
using said paint mists as paint by adjusting the concentration of said recovery solution to which said paint mists are moved.
